# FASCICULE DE BREVET EUROPEEN

(11) **EP 2 164 808 B1**
(45) Date de publication et mention de la délivrance du brevet: **09.03.2011**
(21) Numéro de dépôt: 08827113.5
(22) Date de dépôt: 30.06.2008
(51) Int. Cl.: C02F 1/44, B01D 61/02

(54) **DISPOSITIF AUTONOME D'ÉPURATION D'EAU DE MER À MODULES DE FILTRATION IMMERGÉS ALTERNATIFS À CHAMBRES BASSE PRESSION MULTIPISTONS**
AUTONOME MEERWASSERREINIGUNGSVORRICHTUNG MIT ALTERNIEREND UNTERGETAUCHTEN FILTERUNGSMODULEN MIT MEHRKOLBEN-UNTERDRUCKKAMMERN
AUTONOMOUS SEA WATER PURIFICATION DEVICE HAVING ALTERNATING SUBMERGED FILTRATION MODULES WITH MULTIPISTON LOW-PRESSURE CHAMBERS

(30) Priorité: 03.07.2007 FR 0704803
(43) Date de publication de la demande: 24.03.2010
(73) Titulaire: Lopez (Société par Actions Simplifiée), 27, rue Emile Barrière 31200 Toulouse (FR)
(72) Inventeur: LOPEZ, Fernand, F-31200 Toulouse (FR); LOPEZ, Alexis, F-31500 Toulouse (FR)
(74) Mandataire: Cabinet BARRE LAFORGUE & associés
(86) Numéro de dépôt international: PCT/FR2008/000928
(87) Numéro de publication internationale: WO 2009/019343

(56) Documents cités:
- EP-A- 0 062 944
- DE-A1- 10 211 788

## Description

L'invention concerne un dispositif d'épuration d'eau de mer comprenant au moins une paire de modules de filtration d'eau de mer, notamment par osmose inverse, immergés dans le milieu marin et reliés l'un à l'autre par une transmission motorisée adaptée pour déplacer les modules de filtration de chaque paire selon des mouvements alternatifs de plongée et de remontée dans le milieu marin en opposition de phase, chaque module de filtration comprenant:
- une chambre, dite chambre haute pression, dotée :
   - d'au moins une entrée d'admission sélective (dans certaines phases de fonctionnement) en eau de mer à filtrer à l'intérieur de la chambre haute pression,
   - d'au moins une membrane semi-perméable de filtration de l'eau de mer par osmose inverse,
   - d'au moins une sortie de recueil de l'eau filtrée produite par chaque membrane contenue dans la chambre haute pression,
   - d'au moins une sortie de l'eau de mer de plus grande salinité,
   - une face de piston, dite face de pressurisation, agencée pour présenter une aire utile s, et pouvant se déplacer dans la chambre haute pression de façon à déterminer la pression de l'eau de mer à l'entrée de chaque membrane,
- une face de piston, dite face réceptrice, agencée pour être soumise à la pression hydrostatique du milieu marin, ladite face réceptrice étant solidaire en translation de ladite face de pressurisation, et associée à une chambre étanche sous atmosphère gazeuse, dite chambre basse pression, de telle sorte que le volume de cette chambre basse pression varie dans le même sens que celui de la chambre haute pression sous l'effet des déplacements de la face de pressurisation.

De nombreux dispositifs ont été proposés pour l'épuration d'eau de mer par osmose inverse permettant de produire de l'eau douce par dessalement d'eau de mer. FR 2503129 décrit le principe d'un dispositif d'épuration d'eau de mer tel que mentionné ci-dessus comprenant des modules de filtration par osmose inverse dotés d'un système amplificateur de pression hydrostatique. Lorsqu'un module de filtration est descendu à une profondeur suffisante, la face réceptrice soumise à la pression hydrostatique entraîne une diminution du volume de la chambre basse pression et un déplacement de la face de pressurisation dans la chambre haute pression de façon à en diminuer le volume, appliquant ainsi une pression d'entrée élevée permettant le fonctionnement des membranes de filtration par osmose inverse. Un tel dispositif permet d'obtenir une pression suffisante (qui doit être au moins de 50 hPa, idéalement 60 hPa) pour l'alimentation des membranes en eau de mer, pour une profondeur maximale de plongée des modules limitée à une valeur raisonnable, théoriquement de l'ordre de 10 à 30 m.

Néanmoins, l'exploitation pratique d'un tel dispositif s'est heurtée jusqu'à maintenant à plusieurs difficultés. Tout d'abord, le débit d'eau douce filtrée délivré s'est avéré insuffisant pour permettre une rentabilité acceptable du dispositif, compte tenu de son coût initial à l'installation. Il convient en effet que le débit d'eau douce produit soit suffisant pour permettre de rentabiliser le coût d'investissement en une durée suffisamment faible.

Or, ce débit est limité tout d'abord par la durée des phases de plongée et de remontée de chaque module de filtration qui s'effectuent essentiellement sous l'effet de la gravité, et sont gênées par le frottement hydrodynamique. Ce dernier facteur est proportionnel à l'aire caractéristique (c'est-à-dire l'aire de sa section horizontale hors tout) du module de filtration en plongée. Mais, l'utilisation d'un système amplificateur de pression hydrostatique qui permet de limiter la profondeur maximum de plongée, a aussi pour conséquence d'induire une section de la face réceptrice aussi importante que possible, et donc d'augmenter d'autant la section horizontale du module de filtration. En conséquence, si l'on souhaite limiter la profondeur maximale de plongée (pour des raisons de faisabilité pratique et en vue de réduire la durée des phases de plongée et de remontée), il est nécessaire d'avoir un rapport d'amplification de pression important, donc une section importante du module de filtration, ce qui, en réalité, empêche d'atteindre une vitesse suffisante lors des phases de plongée et de remontée. À l'inverse, si on limite la valeur de la section horizontale du module de filtration, les vitesses de déplacement dans le milieu marin peuvent être suffisantes, mais d'une part la durée des phases de plongée et de remontée reste importante du fait de la longueur du trajet à parcourir, et, d'autre part, le débit fourni à chaque étape de filtration est insuffisant.

Par ailleurs, le débit d'eau filtrée produit est également lié à la vitesse de filtration à chaque étape de filtration, une fois que la pression minimum de filtration par osmose inverse est atteinte dans la chambre haute pression. Or, avec les dispositifs antérieurs, cette vitesse n'est pas optimale et est limitée en particulier en fin de course par les organes de rappel qui doivent être prévus pour replacer ensuite la chambre basse pression en position de volume maximum lorsque le module de filtration revient en surface.

Ainsi, l'inventeur a déterminé que le débit total (sur un cycle complet de fonctionnement du dispositif) d'eau filtrée produit par les dispositifs antérieurs connus n'est pas suffisant pour permettre leur exploitation à l'échelle industrielle avec une rentabilité acceptable.

L'invention vise donc à pallier ces inconvénients en proposant un dispositif d'épuration d'eau de mer perfectionné, notamment utilisant le phénomène d'osmose inverse, pour le dessalement de l'eau de mer produisant, à coût d'investissement équivalent, un débit total d'eau filtré amélioré.

L'invention vise plus particulièrement à proposer un tel dispositif d'épuration d'eau de mer avec lequel, pour un débit d'eau filtrée donné, la durée des étapes de déplacement des modules de filtration en plongée/remontée est réduite. L'invention vise encore plus particulièrement à proposer un tel dispositif d'épuration d'eau de mer avec lequel, pour un débit d'eau filtrée donné, la durée de l'étape de filtration par osmose inverse à la profondeur maximum de plongée est réduite. Autrement dit, l'invention vise à proposer un dispositif d'épuration d'eau de mer avec lequel, pour une durée donnée d'un cycle de fonctionnement (étape de plongée/remontée et étape de filtration par osmose inverse), le débit d'eau douce produit est augmenté.

L'invention vise plus particulièrement à proposer un tel dispositif d'épuration d'eau de mer avec lequel la profondeur d'immersion maximale des modules de filtration peut être réellement limitée à une valeur comprise entre 10 m et 30 m.

L'invention vise plus particulièrement à proposer un tel dispositif exempt de pièce mécanique de rappel ou de tout organe de rappel.

L'invention vise également à proposer un tel dispositif d'épuration d'eau de mer qui soit simple et peu coûteux à la fabrication et à l'entretien. L'invention vise aussi à proposer un tel dispositif qui soit très fiable et qui présente un fonctionnement totalement autonome (notamment permettant son utilisation dans les pays en voie de développement). En particulier, l'invention vise à proposer un tel dispositif qui puisse fonctionner avec une transmission motorisée alimentée par au moins une source d'énergie renouvelable (vent, soleil...). (Dans tout le texte, le terme « motorisé » fait référence de façon générale à tout dispositif délivrant de l'énergie mécanique).

Pour ce faire, l'invention concerne un dispositif d'épuration d'eau de mer comprenant au moins une paire de modules de filtration d'eau de mer, notamment par osmose inverse, immergés dans le milieu marin et reliés l'un à l'autre par une transmission motorisée adaptée pour déplacer les modules de filtration de chaque paire selon des mouvements alternatifs de plongée et de remontée dans le milieu marin en opposition de phase, chaque module de filtration comprenant :
- au moins une chambre, dite chambre haute pression, dotée :
   - d'au moins une entrée d'admission sélective en eau de mer à filtrer à l'intérieur de la chambre haute pression,
   - d'au moins une membrane semi-perméable de filtration de l'eau de mer par osmose inverse,
   - d'au moins une sortie de recueil de l'eau filtrée produite par chaque membrane contenue dans la chambre haute pression,
   - d'au moins une sortie de l'eau de mer de plus grande salinité,
   - d'au moins une face de piston, dite face de pressurisation, agencée pour présenter une aire utile s, et pouvant se déplacer dans la chambre haute pression en translation selon un axe, dit axe longitudinal, de façon à déterminer la pression de l'eau de mer à l'entrée de chaque membrane,
caractérisé en ce qu'il comprend au moins un bloc cylindre basse pression comportant une pluralité de faces de piston, dites faces réceptrices, reliées à au moins une face de pressurisation de façon à pouvoir l'entraîner en translation longitudinale, ces différentes faces réceptrices étant agencées pour être toutes soumises à la pression hydrostatique du milieu marin, l'aire utile S totale cumulée des différentes faces réceptrices ayant une valeur supérieure à l'aire utile s de ladite face de pressurisation à laquelle elles sont reliées, chaque face réceptrice étant associée à au moins une chambre étanche sous atmosphère gazeuse, dite chambre basse pression, du bloc cylindre basse pression de telle sorte que le volume de chaque chambre basse pression varie dans le même sens que celui de la chambre haute pression sous l'effet des déplacements simultanés en translation des faces réceptrices et de ladite face de pressurisation.

Dès lors, chaque module de filtration peut comprendre un nombre de faces réceptrices toutes reliées à une même face de pressurisation qui est adaptée pour obtenir un rapport d'amplification de pression approprié permettant la filtration par osmose inverse à une profondeur maximum prédéterminée, et les différentes faces réceptrices peuvent être agencées les unes par rapport aux autres de telle sorte que la section transversale du module de filtration dans la direction horizontale reste limitée à une valeur admissible ne nuisant pas sensiblement aux déplacements du module de filtration lors de ses mouvements alternatifs de plongée et de remontée dans le milieu marin. En outre, ladite profondeur maximum reste à une valeur suffisamment faible. L'invention permet ainsi en combinaison d'une part d'augmenter la valeur du débit d'eau douce produit par chaque module de filtration à chaque étape de filtration par osmose inverse (lorsque ce module de filtration est en profondeur), d'autre part de diminuer considérablement la durée des phases de plongée et de remontée, de telle sorte que cette durée ne soit plus une limitation à la valeur du débit total d'eau douce produit.

Avantageusement et selon l'invention, les différentes faces réceptrices reliées à une même face de pressurisation sont agencées les unes par rapport aux autres de telle sorte que le bloc cylindre basse pression présente, par rapport à l'axe longitudinal, un encombrement transversal hors tout total inférieur ou égal à l'encombrement transversal hors tout de la portion du module de filtration délimitant la chambre haute pression comprenant ladite face de pressurisation. Ainsi, l'encombrement hors tout transversal horizontal d'un module de filtration est déterminé par celui de la portion contenant la chambre haute pression, ce dernier étant minimisé pour pouvoir juste contenir au moins une membrane d'osmose inverse et au moins une face de pressurisation.

De la sorte, dans un dispositif selon l'invention, pour un même encombrement transversal hors tout de la chambre haute pression par rapport à l'axe longitudinal, on peut augmenter l'aire utile S totale cumulée des différentes faces réceptrices associées à une même face de pressurisation, et donc augmenter le débit délivré par cette face de pressurisation et/ou diminuer la profondeur à laquelle la filtration par osmose inverse s'effectue. En particulier, avantageusement et selon l'invention l'aire utile S totale cumulée des différentes faces réceptrices est supérieure à l'encombrement horizontal hors tout du module de filtration.

Les configurations relatives des différentes faces réceptrices et de la face de pressurisation associée peuvent varier, ainsi que les modes de réalisation de la liaison mécanique entre chaque face réceptrice et la face de pressurisation correspondante. Avantageusement et selon l'invention, les différentes faces réceptrices reliées à une même face de pressurisation sont guidées en translation parallèlement à l'axe longitudinal.

Plus particulièrement, avantageusement un dispositif selon l'invention est aussi caractérisé en ce que les différentes faces réceptrices reliées à une même face de pressurisation sont parallèles les unes les autres et à la face de pressurisation, et orthogonales à l'axe longitudinal, et en ce que ces différentes faces réceptrices sont agencées les unes par rapport aux autres de façon à présenter, par rapport à l'axe longitudinal, un encombrement transversal total inférieur à la somme des encombrements transversaux de chacune des faces réceptrices. Avantageusement et selon l'invention, les différentes faces réceptrices reliées à une même face de pressurisation sont superposées les unes les autres dans la direction longitudinale de l'axe longitudinal de telle sorte que l'encombrement transversal de l'ensemble des dites faces réceptrices est équivalent à celui d'une seule de ses faces réceptrices. Ainsi, on peut multiplier les faces réceptrices empilées le long de l'axe longitudinal, sans augmenter l'encombrement transversal du module de filtration.

Par ailleurs, avantageusement et selon l'invention, chaque face réceptrice est solidaire en translation d'une face de piston, dite face basse pression, s'étendant dans la chambre basse pression. Là encore, les configurations relatives de chaque face réceptrice et de la face basse pression correspondante peuvent varier. Avantageusement et selon l'invention, la face réceptrice et la face basse pression sont deux faces opposées parallèles d'un même piston guidé en translation de façon étanche dans un cylindre de façon à délimiter, avec ce dernier, ladite chambre basse pression. En outre, avantageusement et selon l'invention, la face de pressurisation présente au moins sensiblement la même orientation que chaque face basse pression par rapport au piston correspondant. En particulier, avantageusement et selon l'invention, au moins une face de pressurisation est reliée à une face basse pression par une tige traversant la chambre basse pression correspondante de façon étanche. Dans ce mode de réalisation avantageux, ladite face de pressurisation, la face réceptrice et la face basse pression sont des faces d'un même piston mobile formé d'une seule pièce ou d'un assemblage de plusieurs pièces solidaires entre elles.

Dans un mode de réalisation préférentiel, avantageusement et selon l'invention, le dispositif est caractérisé en ce que chaque face réceptrice est une face d'un piston délimitant la chambre basse pression, en ce qu'il comprend un piston et une chambre basse pression pour chaque face réceptrice, et en ce que les différents pistons présentant les différentes faces réceptrices sont reliés en translation les uns aux autres et à ladite face de pressurisation. De la sorte, lorsque le module de filtration est en phase de plongée, chaque face réceptrice transmet l'effet de la pression hydrostatique au piston correspondant qui est déplacé en translation et entraîne chaque face de pressurisation correspondante à laquelle il est relié en translation dans la chambre haute pression, alimentant ainsi chaque membrane de filtration en eau de mer à filtrer sous haute pression.

Par ailleurs, avantageusement et selon l'invention, les chambres basse pression des deux modules de filtration sont reliées les unes aux autres par au moins un conduit d'équilibrage des pressions, chaque conduit d'équilibrage des pressions étant adapté pour permettre l'équilibrage des pressions entre les chambres basse pression sensiblement sans perte de charge. Ce conduit d'équilibrage des pressions permet d'une part de faciliter l'expansion de chaque chambre basse pression à la fin de la phase de remontée d'un module de filtration, sans nécessiter de moyens de rappel mécanique, mais réciproquement d'éviter tout phénomène de contre pression nuisible en fin de déplacement en translation de la face de pressurisation du module de filtration en profondeur. Chaque chambre basse pression du module de filtration situé proche de la surface en cours d'expansion crée même une certaine aspiration dans les chambres basses pression du module de filtration situé en profondeur, qui facilite l'entraînement de la face de pressurisation.

Par ailleurs, avantageusement et selon l'invention, chaque module de filtration est suspendu dans le milieu marin par au moins un câble de suspension de la transmission motorisée, l'axe longitudinal de chaque face de pressurisation et des faces réceptrices correspondantes étant vertical. Chaque module de filtration se présente donc globalement sous la forme d'un cylindre allongé d'axe vertical et de formes hydrodynamiques dont les déplacements de plongée et de remontée dans le milieu marin sont ainsi facilités.

Avantageusement et selon l'invention, le câble de suspension est accouplé à un piston délimitant une chambre basse pression. De la sorte, le propre poids du module de filtration tend à entraîner l'expansion des chambres basse pression. Ainsi, lors de la remontée du module de filtration, le poids de ce dernier tend spontanément à déployer chaque chambre basse pression dans le sens d'une augmentation de son volume, ce qui génère une aspiration dans la chambre basse pression de l'autre module de filtration en cours de descente, via le(les) conduit(s) d'équilibrage de pression. Cette aspiration participe à l'entraînement de la face de pressurisation et de chaque face réceptrice de ce module de filtration en cours de descente.

De préférence, avantageusement et selon l'invention, chaque chambre basse pression s'étend au-dessus de la chambre haute pression. De même, avantageusement et selon l'invention, chaque module de filtration comprend un bloc cylindre basse pression unique surmontant une chambre haute pression unique incorporant une face de pressurisation unique d'axe longitudinal vertical. D'autres modes de réalisation sont néanmoins envisageables, par exemple avec une chambre haute pression située au-dessus des chambres basse pression, ou avec une chambre haute pression interposée entre deux blocs cylindres basse pression, ou encore avec un bloc cylindre basse pression interposé entre deux chambres haute pression.

Avantageusement, dans un dispositif selon l'invention, ladite transmission motorisée est adaptée pour permettre des déplacements de chaque module de filtration entre la surface du milieu marin et une profondeur d'immersion maximale comprise entre 10 m et 30 m, par exemple de l'ordre de 20 m, et le rapport des aires utiles S/s (pour une chambre basse pression comportant 3 pistons) est compris entre 6,6 et 20, mais le rapport Si/s de l'aire utile Si de chaque face réceptrice sur l'aire utile s de la face de pressurisation est compris entre 20 et 60.

Par ailleurs, avantageusement et selon l'invention, ladite transmission motorisée comprend au moins une source d'énergie renouvelable choisie parmi une éolienne et un panneau de capteurs solaires photovoltaïques.

Une éolienne peut être utilisée pour entraîner directement au moins un organe tel qu'une poulie d'un mécanisme d'entraînement et/ou de suspension des deux modules de filtration d'une même paire, avec un mécanisme d'arrêt de déplacement et d'inversion du sens de déplacement de chaque module en fin de course verticale (cf. par exemple FR 2503129). Dans ce cas, le dispositif selon l'invention est particulièrement simple, fiable et totalement autonome dans son fonctionnement. En variante, une éolienne associée à une génératrice de courant et/ou au moins un panneau de capteurs photovoltaïques alimente au moins une batterie d'accumulateurs électriques adaptés pour permettre le fonctionnement d'un moteur électrique d'entraînement d'au moins un organe tel qu'une poulie d'un mécanisme d'entraînement et/ou de suspension de deux modules de filtration de la même paire. L'arrêt du déplacement et l'inversion du sens de déplacement de chaque module peut alors résulter d'un automatisme électrique changeant le sens de rotation du moteur.

Il est à noter que lorsque les deux modules de filtration d'une même paire sont suspendus à un même câble de suspension, ces deux modules étant identiques et de même poids, l'énergie nécessaire pour entraîner ces deux modules de filtration dans leurs déplacements de plongée et de remontée alternatifs dans le milieu marin en opposition de phase est donc très faible.

L'invention peut s'appliquer à tous les modes de réalisation pouvant être envisagés en ce qui concerne les moyens amplificateurs de pression hydrostatique et les moyens de filtration par osmose inverse de chaque module de filtration. Elle s'applique notamment aux modes de réalisation décrits dans FR 2503129. Cela étant, en particulier le nombre et les dispositions relatives des chambres haute pression, basse pression, et des faces de pressurisation et réceptrices peuvent varier.

Un dispositif selon l'invention peut par exemple se présenter sous forme d'une plate-forme fixe installée en mer, ou sous forme d'une tour ou d'un puits installé sur le rivage pour être rempli d'eau de mer.

L'invention concerne également un dispositif d'épuration d'eau de mer caractérisé en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées représentant à titre d'exemples non limitatifs des modes de réalisation de l'invention, et dans lesquelles :
- la figure 1 est un schéma général de principe d'un premier mode de réalisation d'un dispositif selon l'invention se présentant sous forme d'une plate-forme maritime,
- la figure 2 est un schéma général de principe d'un deuxième mode de réalisation d'un dispositif selon l'invention se présentant sous forme d'une tour sur le rivage maritime,
- la figure 3a est un schéma en coupe verticale d'un exemple de réalisation d'un module de filtration d'un dispositif selon l'invention, les figures 3b et, respectivement, 3c étant des schémas similaires à la figure 3a représentant ce module en fin de course de plongée en profondeur et, respectivement, de remontée à la surface,
- la figure 4 est un schéma en coupe verticale d'un deuxième exemple de réalisation d'un module de filtration d'un dispositif selon l'invention.

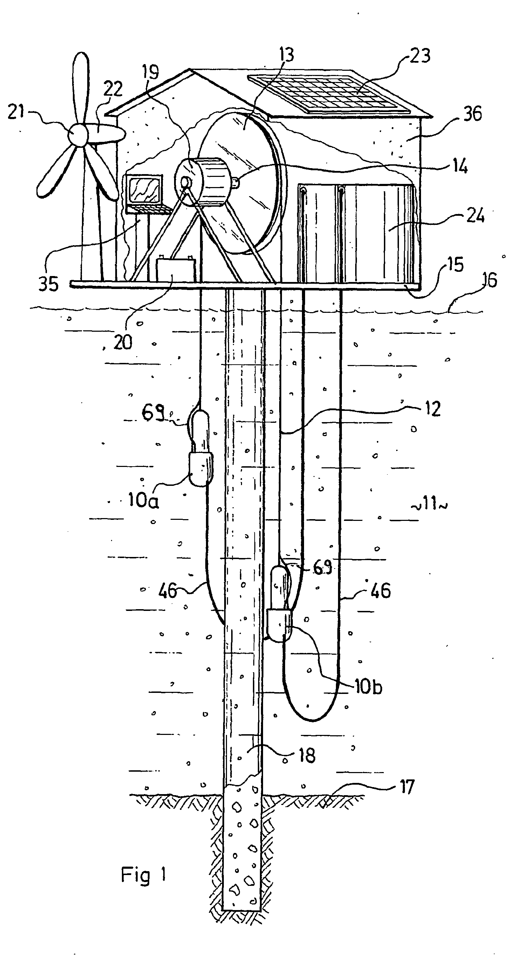

Le dispositif selon l'invention représenté figure 1 comprend une paire de modules de filtration 10a, 10b d'eau de mer, notamment par osmose inverse, immergés dans le milieu marin 11 et reliés l'un à l'autre par un câble 12 de suspension sortant de l'eau pour passer autour d'une poulie 13 émergée montée en rotation autour d'un axe horizontal 14 sur une plate-forme 15 disposée au-dessus de la surface 16 de l'eau. Les deux modules de filtration 10a, 10b d'une même paire sont identiques.

La plate-forme 15 est ancrée de telle sorte qu'elle reste au moins sensiblement immobile, ainsi que les modules de filtration 10a, 10b, par rapport au sol sous-marin 17, et ce par exemple grâce au moins à un poteau 18 plongeant dans le sol 17, ou à tout autre système d'ancrage approprié (par exemple un ensemble de corps-morts reliés à la plate-forme 15 par des câbles ou des chaînes...).

La poulie 13 est accouplée à un moteur électrique 19 qui l'entraîne en rotations alternatives dans un sens, puis dans l'autre, sous contrôle d'un automate 35 avec des phases d'arrêt en fins de course d'une durée prédéterminée pour permettre le déroulement de la filtration par osmose inverse dans le module de filtration 10a, 10b immergé à la profondeur maximum. L'automate 35 comprend une interface homme-machine (écran, clavier...) et est programmable. Il peut être réalisé à partir d'un micro-ordinateur standard.

Les deux modules de filtration 10a, 10b sont reliés l'un à l'autre par le câble 12 de suspension et se déplacent en opposition de phase au cours de la rotation de la poulie 13, l'un des modules de filtration 10a, 10b étant en cours de remontée vers la surface tandis que l'autre module de filtration 10b, 10a de la même paire est en cours de plongée.

Le moteur électrique 19 est alimenté par une source d'énergie électrique, par exemple une batterie d'accumulateurs 20 rechargée par une éolienne 21 accouplée à une génératrice 22 et/ou au moins un panneau de capteurs solaires photovoltaïques 23. Le moteur électrique 19 peut incorporer un réducteur ou toute autre transmission mécanique appropriée permettant d'entraîner la poulie 13 à une vitesse suffisante pour que les phases de plongée et de remontée soient aussi rapides que possible, mais pas trop importante pour éviter toute diminution de tension dans le câble 12 (la vitesse d'entraînement du câble 12 de suspension restant inférieure à la vitesse maximum de plongée de chaque module 10a, 10b par gravité).

La plate-forme 15 porte également un réservoir 24 de récupération de l'eau douce produite par chacun des modules 10a, 10b l'ensemble des différents composants portés par la plate-forme 15, à l'exception de l'éolienne 21 et des capteurs solaires 23, peuvent être protégés par un capotage ou un bâtiment 36. En variante, ce réservoir 24 peut être situé sur la terre ferme notamment si la plate-forme 15 est proche de la côte.

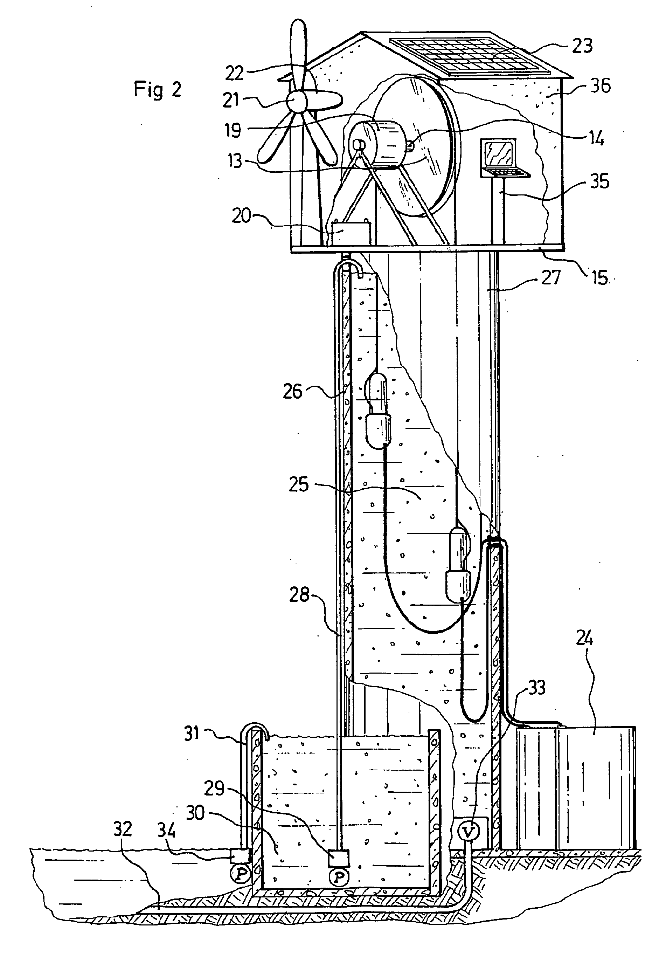

La figure 2 représente une variante de réalisation d'un tel dispositif selon l'invention dans laquelle les modules 10a, 10b sont immergés dans une colonne d'eau de mer 25 située dans une tour 26 disposée à proximité du rivage marin. Le sommet 27 de la tour forme une plate-forme similaire à la plate-forme 15 du premier mode de réalisation et recevant les mêmes éléments 13 à 23 décrits ci-dessus. Dans une autre variante non représentée, la colonne d'eau peut être située dans un puits creusé dans le sol du rivage.

L'intérêt de ces deux variantes par rapport au mode de réalisation de la figure 1 consiste dans le fait que les modules de filtration 10a, 10b ne sont plus soumis au milieu naturel, et en particulier aux courants marins, de sorte que le fonctionnement du dispositif peut être plus stable. L'avantage du premier mode de réalisation de la figure 1 est cependant qu'il présente un coût d'investissement plus faible, et qu'il n'est pas nécessaire de prévoir des moyens d'aspiration de l'eau de mer à traiter ni des moyens de purge de l'eau de mer concentrée (de plus grande salinité).

En outre, dans la variante de la figure 2, le réservoir de récupération 24 est situé en bas de la colonne d'eau 25, de sorte que la récupération de l'eau douce filtrée s'effectue par gravité. Cela étant, il est à noter que dans le premier mode de réalisation représenté figure 1, les modules de filtration 10a, 10b par osmose inverse fournissent l'eau douce avec une pression largement suffisante pour permettre sa remontée en surface. Ainsi, en variante non représentée, le réservoir de récupération 24 peut être formé d'une colonne s'étendant verticalement parallèlement à la tour 26.

La colonne d'eau 25 est alimentée en eau de mer à partir d'une conduite 28 et d'une pompe 29 pouvant être accouplée au moteur électrique 19. De préférence, dans le mode de réalisation représenté figure 2, la conduite 28 prélève l'eau de mer à partir d'un bassin 30 de stockage intermédiaire d'eau de mer en partie basse de la tour 26, ce bassin 30 étant lui-même alimenté en eau de mer par les marées et/ou par une conduite 31 reliée à une pompe 34. Par ailleurs, une conduite de vidange 32 est avantageusement prévue débouchant au fond de la colonne 25 et dotée d'une vanne 33 de vidange. Cette conduite de vidange 32 débouche dans le milieu marin. Lorsque la vanne 33 est ouverte, la colonne 25 peut-être vidangée, par exemple à des fins de nettoyage ou afin d'extraire et de renouveler l'eau de mer en fond de colonne 25 dont la salinité tend à augmenter au fur et à mesure de la production d'eau douce.

Par ailleurs, en variante non représentée, la pompe 29 d'alimentation de la colonne 25 peut être remplacée par une noria à défilement continu entraînée directement par l'éolienne 21, et la pompe 34 d'alimentation du bassin intermédiaire 30 peut être supprimée si ce bassin intermédiaire 30 est situé en dessous du niveau de la mer et est alimenté par une conduite inclinée. Ce mode de réalisation est particulièrement simple et permet l'exploitation de l'invention avec mise en oeuvre de technologies mécaniques rudimentaires, dans les régions les plus reculées de la planète. La réparation d'un tel dispositif est extrêmement facile à réaliser avec des moyens élémentaires.

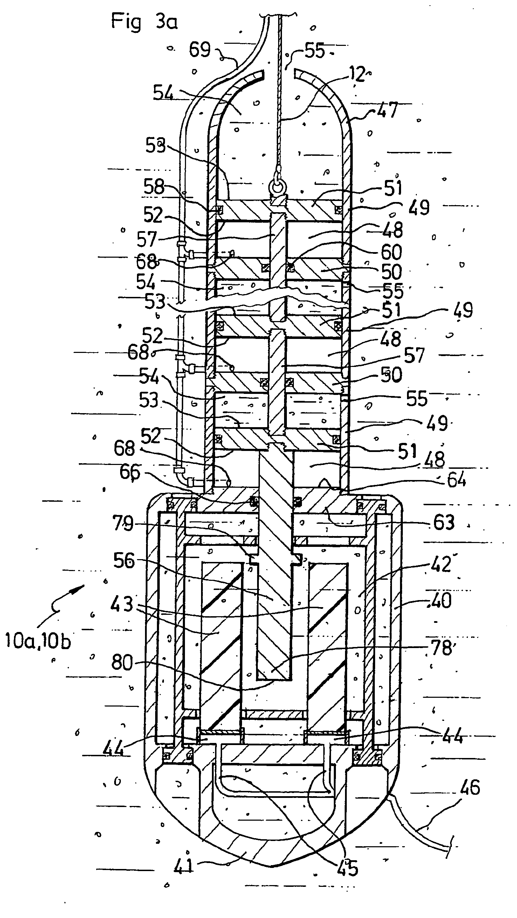

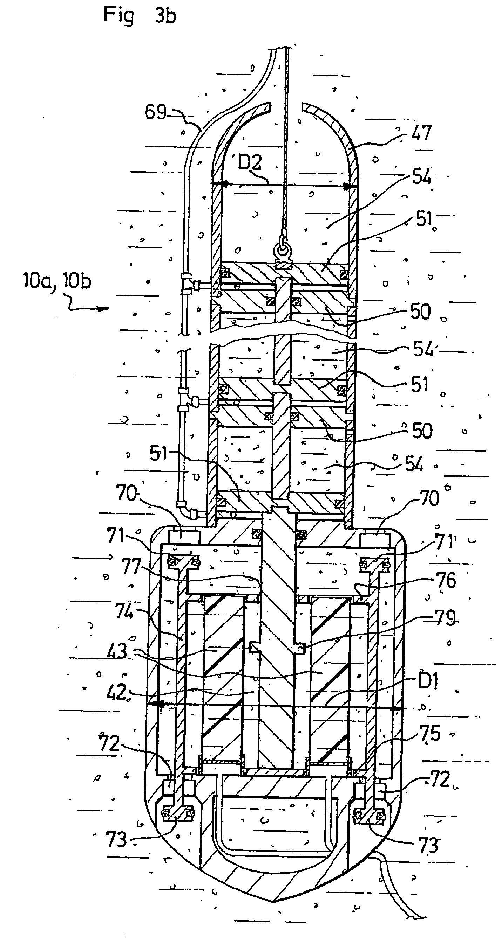

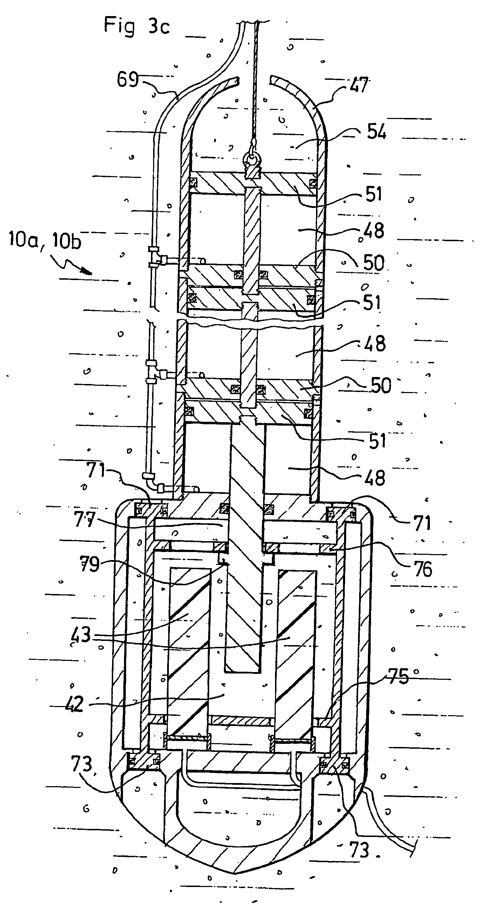

Les figures 3a, 3b, 3c représentent un exemple de réalisation d'un module de filtration 10a, 10b.

Ce module de filtration se présente globalement sous forme oblongue hydrodynamique facilitant ses déplacements de plongée et de remontée dans l'eau. Il comprend donc un corps 40 allongé globalement cylindrique métallique ou en matière synthétique avec une extrémité inférieure arrondie 41 pouvant être lestée de façon à augmenter la tension sur le câble de suspension 12.

En partie basse, au-dessus de l'extrémité inférieure 41, le corps 40 définit une chambre haute pression 42 contenant au moins une membrane 43 de filtration par osmose inverse. Dans l'exemple représenté, la chambre 42 haute pression contient deux membranes 43. Chaque membrane haute pression 43 présente une extrémité inférieure 44 par laquelle s'écoule l'eau douce filtrée par ladite membrane 43, cette extrémité 44 étant reliée à une conduite 45 de sortie traversant le corps 40. La conduite 45 de sortie est reliée à l'extérieur du corps 40 à un tuyau 46 flexible de recueil de l'eau filtrée, ce tuyau 46 étant lui-même relié au réservoir 24 de récupération de l'eau.

La chambre haute pression 42 est surmontée d'un bloc cylindre basse pression 47 comprenant une pluralité de chambres basse pression 48 en série. Le bloc cylindre 47 est formé d'une pluralité de tronçons de cylindre 49 d'axe vertical creux empilés les uns sur les autres axialement et séparés deux à deux par un flasque 50 de séparation. Chaque flasque 50 est formé d'un disque doté d'un double filetage permettant de chaque côté la fixation d'un tronçon de cylindre 49 dont l'extrémité axiale est dotée d'un taraudage correspondant, de façon à permettre l'empilement des tronçons 49 pour former un cylindre d'axe vertical. Chaque tronçon de cylindre 49 contient un piston 51 guidé en translation axiale verticale dans ce tronçon de cylindre 49.

Chaque chambre basse pression 48 est délimitée entre l'un des flasques 50 fixes et le piston 51 guidé en translation axiale verticale dans l'un des tronçons de cylindre 49 de façon étanche.

Chaque piston 51 est en forme générale de disque et présente une première face principale, dite face basse pression 52, délimitant la chambre basse pression 48, et une deuxième face principale opposée, dite face réceptrice 53, formant, avec la portion de tronçon de cylindre 49 s'étendant au-dessus de cette face réceptrice 53 et, le cas échéant, avec le flasque de séparation 50 situé immédiatement au-dessus, une chambre, dite chambre réceptrice 54, soumise à la pression hydrostatique du milieu marin.

Chaque tronçon de cylindre 49 est doté, à son extrémité supérieure, d'orifices 55 traversant la paroi du tronçon de cylindre 49 pour permettre le passage libre de l'eau de mer sensiblement sans perte de charge depuis l'extérieur (milieu marin environnant) dans la chambre réceptrice 54, de telle sorte que cette chambre réceptrice 54 ainsi que la face réceptrice 53 sont soumises à la pression hydrostatique du milieu marin environnant.

Les différents pistons 51 sont reliés solidaires en translation axiale verticale d'une part les uns aux autres par des tiges de liaison 57 et d'autre part à un piston de pressurisation 56 pénétrant dans la chambre haute pression 42.

Chaque tige de liaison 57 relie l'un à l'autre deux pistons 51 adjacents en traversant axialement de façon étanche le flasque 50 qui sépare ces deux pistons 51. Pour ce faire, chaque flasque 50 de séparation est doté d'un alésage axial central traversant. Chaque piston 51 peut-être doté d'un double taraudage, c'est-à-dire d'un taraudage sur chacune de ses faces 52, 53 pour recevoir l'extrémité filetée d'une telle tige 57.

L'étanchéité entre chaque piston 51 et la paroi interne du tronçon de cylindre 49 correspondant est assurée par un joint d'étanchéité 58 disposé dans une gorge périphérique médiane du piston 51. L'étanchéité entre chaque tige 57 de liaison et le flasque 50 qu'elle traverse est également assurée par un joint d'étanchéité 60 disposé dans une gorge médiane débouchant dans l'alésage axial traversant ménagé à travers le flasque 50 pour le passage de cette tige 57 de liaison.

Le premier tronçon de cylindre 49 situé le plus bas s'étend à partir d'un flasque 63 du corps 40 délimitant en partie haute la chambre haute pression 42. La première chambre basse pression 48 qui est la plus basse est donc délimité entre la portion de la face supérieure 64 de ce flasque 63 s'étendant en regard de l'intérieur du premier tronçon de cylindre 49, et la face basse pression 52 du premier piston 51 qui est le plus bas.

Le piston de pressurisation 56 est formé d'une tige traversant axialement le flasque 63 supérieur de la chambre haute pression 42 de façon étanche via un alésage central ménagé à travers ce flasque 63. Ce piston de pressurisation 56 est relié au dit premier piston 51 du côté de sa face basse pression 52, de façon à être solidaire en translation axiale de ce dernier et des différents pistons 51. Pour ce faire, l'extrémité supérieure du piston de pressurisation 56 est filetée de façon à pouvoir être vissée dans le taraudage de la face basse pression 52, à la façon d'une tige de liaison 57. L'extrémité libre opposée 78 de la tige formant le piston de pressurisation 56 constitue une face de pressurisation 80 se déplaçant dans la chambre haute pression 42. Ainsi, le piston de pressurisation 56 est relié à chaque piston 51 de telle sorte que la face de pressurisation 80 de ce piston de pressurisation 56 soit orientée du même côté que la face basse pression 52 de chaque piston 51, à savoir horizontalement vers le bas dans l'exemple de réalisation représenté.

Le piston de pressurisation 56 traverse le flasque 63 de façon étanche grâce à un joint d'étanchéité 66 disposé dans une gorge périphérique débouchant dans l'alésage central ménagé à travers ce flasque 63.

Le dernier piston 51 disposé à l'extrémité supérieure du bloc cylindre 47 est suspendu au câble 12 de suspension. Le module de filtration 10a, 10b est donc ainsi suspendu à ce câble 12 de suspension dans le milieu marin, avec l'axe longitudinal de translation du piston de pressurisation 56 qui s'étend verticalement.

Chaque chambre basse pression 48 est remplie d'un mélange gazeux, par exemple de l'air atmosphérique. La paroi de chaque tronçon de cylindre 49 est dotée en partie inférieure, immédiatement au-dessus du flasque 50 de séparation sur lequel ledit tronçon de cylindre 49 est assemblé, d'au moins un orifice traversant 68 communiquant avec un conduit 69 d'équilibrage des pressions s'étendant à l'extérieur du bloc cylindre 47. Cet orifice 68 permet donc la libre circulation dans le conduit 69 d'équilibrage des pressions, du gaz contenu dans la chambre basse pression 48. Tous les orifices 68 communiquant avec les différentes chambres basse pression 48 sont reliés au même conduit 69 d'équilibrage des pressions. Par ailleurs, chaque orifice 68 est disposé dans la chambre basse pression 48 correspondante de façon à être en communication avec cette chambre 48 quelle que soit la position du piston 51 dans le tronçon de cylindre 49. Dans l'exemple représenté, l'orifice 68 est disposé immédiatement au-dessus du flasque de séparation 50, c'est-à-dire à l'extrémité inférieure du tronçon de cylindre 49.

Le conduit 69 d'équilibrage des pressions est un tuyau souple qui peut être passé le long du câble 12 de suspension, et qui relie les deux modules de filtration 10a, 10b, de sorte que les différentes chambres basse pression 48 de ces deux modules de filtration 10a, 10b sont en communication les unes avec les autres, au moins sensiblement à la même pression de gaz régnant à l'intérieur de ces différentes chambres basse pression 48. Le nombre et le diamètre des orifices 68, ainsi que le diamètre interne du conduit 69 d'équilibrage des pressions sont en effet adaptés pour permettre l'équilibrage des pressions entre les différentes chambres basse pression 48, sensiblement sans perte de charge. Dans les variantes représentées figures 1 et 2, le conduit 69 d'équilibrage des pressions s'étend le long du câble 12 de suspension, et passe avec ce dernier autour de la poulie 13. Pour ce faire, cette poulie 13 comprend une première gorge interne recevant le câble 12, et une deuxième gorge externe de plus grande largeur recevant le conduit 69.

Le diamètre extérieur D1 du corps 40 dans sa partie délimitant la chambre haute pression 42 correspond au diamètre hors tout du module de filtration et est supérieur au diamètre extérieur D2 du bloc cylindre 47 basse pression. De la sorte, le flasque supérieur 63 présente, à l'extérieur du bloc cylindre 47, des entrées 70 d'eau de mer communiquant avec l'intérieur de la chambre haute pression 42. Chaque entrée 70 d'eau de mer permet donc de relier le milieu marin environnant à l'intérieur de la chambre haute pression 42, et est obturée de façon étanche par un clapet supérieur 71. De même, l'extrémité inférieure 41 du corps 40 est dotée de sorties 72 d'eau de mer de plus grande salinité communiquant également avec l'intérieur de la chambre haute pression 42. Chaque sortie 72 d'eau de mer permet donc de relier au milieu marin environnant l'intérieur de la chambre haute pression 42, et est obturée de façon étanche par un clapet inférieur 73.

Les différents clapets 71, 73 sont solidaires les uns des autres et portés par un équipage mobile 74 s'étendant à l'intérieur de la chambre haute pression 42 et présentant un flasque horizontal inférieur 75 et un flasque horizontal supérieur 76, ce dernier présentant un alésage central 77 traversé par le piston de pressurisation 56.

L'équipage mobile 74 est adapté pour que l'extrémité libre inférieure 78 du piston de pressurisation 56 vienne au contact du flasque inférieur 75 en fin de course de déplacement vers le bas à l'intérieur de la chambre haute pression 42, de façon à repousser ce flasque 75 vers le bas et à déplacer les différents clapets 71, 73 vers le bas, ce par quoi les entrées 70 d'eau de mer et les sorties 72 d'eau de mer sont ouvertes (figure 3b).

L'équipage mobile 74 est aussi adapté pour qu'un collet 79 solidaire du piston de pressurisation 56 vienne au contact du flasque supérieur 76 en fin de course de déplacement vers le haut à l'intérieur de la chambre haute pression 42, de façon à repousser ce flasque 76 vers le haut et à déplacer les différents clapets 71, 73 vers le haut, ce par quoi les entrées 70 d'eau de mer et les sorties 72 d'eau de mer sont obturées (figure 3c).

En conséquence, le piston de pressurisation 56 commande l'ouverture et la fermeture des entrées 70 et des sorties 72 d'eau de mer.

Les différentes faces réceptrices 53 des différents pistons 51 présentent une aire utile totale S soumise à la pression hydrostatique du milieu marin environnant. Cette aire utile totale S est égale à la somme des aires utiles S1, S2,..., Sn de chaque face réceptrice 53.

La face de pressurisation 80 du piston de pressurisation 56 a une aire utile s correspondant à l'aire de la section de la tige formant ce piston de pressurisation 56.

L'aire utile S totale des différentes faces réceptrices 53 (c'est-à-dire la somme des aires Si de chaque face réceptrice 53 recevant la pression hydrostatique du milieu marin environnant) est supérieure à l'aire utile s du piston de pressurisation 56 et le rapport des aires utiles S/s est avantageusement compris entre 15 et 40, notamment de l'ordre de 30 et Si/s est avantageusement compris entre 5 et 15, notamment de l'ordre de 10.

La pression hydrostatique subie par les différentes faces réceptrices 53 est transmise, avec un rapport d'amplification correspondant au rapport des aires utiles S/s, à la chambre haute pression 42. Lorsque le module de filtration 10a, 10b est en plongée et descend dans le milieu marin, la pression hydrostatique augmente, ainsi que la pression dans la chambre haute pression 42.

Lorsque le module de filtration 10a, 10b est immergé à une profondeur suffisante, le piston de pressurisation 56 imprime donc dans la chambre haute pression 42 une pression de valeur suffisante (typiquement supérieure ou égale à 60 hPa) pour permettre la filtration par osmose inverse par les membranes 43. Le volume de chaque chambre basse pression 48 varie dans le même sens que celui de la chambre haute pression 42 sous l'effet des déplacements du piston de pressurisation 56. Ainsi, lorsque le piston de pressurisation 56 d'un module de filtration 10a, 10b immergé à la profondeur maximum se déplace vers le bas en pénétrant dans la chambre haute pression 42, le volume des différentes chambres basse pression 48 diminue. Ce faisant, le conduit 69 d'équilibrage des pressions transmet une augmentation de pression correspondante aux chambres basse pression 48 de l'autre module de filtration 10b, 10a qui se trouve alors près de la surface (en fin de course de remontée). De la sorte, les chambres basse pression 48 de cet autre module de filtration 10b, 10a augmentent de volume, sous l'effet de cette pressurisation via le conduit 69 d'équilibrage des pressions, ce qui rappelle automatiquement le piston de pressurisation 56 en position haute.

La figure 3a représente le module de filtration 10a, 10b alors qu'il est à la profondeur maximum de plongée, au cours du déplacement du piston de pressurisation 56 vers le bas, de l'eau douce filtrée étant produite à la sortie des membranes 43.

La figure 3b représente le module de filtration 10a, 10b en début de remontée. Dans cette position, le piston de pressurisation 56 a atteint la fin de sa course de déplacement vers le bas à l'intérieur de la chambre haute pression 42, jusqu'à venir au contact du flasque inférieur 75 en déplaçant l'équipage mobile 74 vers le bas pour ouvrir les entrées 70 et les sorties 72. De la sorte, au cours de la remontée, l'eau de mer traverse la chambre haute pression 42 tout en balayant les membranes 43. Cet effet de balayage est propice au fonctionnement des membranes par osmose inverse 43. Par ailleurs, au cours de cette remontée, le module de filtration 10a, 10b étant suspendu par le dernier piston 51, l'ensemble du poids du module de filtration 10a, 10b tend à provoquer l'augmentation de volume des chambres basse pression 48. En outre, comme indiqué ci-dessus, cette augmentation de volume est également provoquée par l'augmentation de pression dans les chambres basse pression 48 résultant de la plongée du module de filtration 10b, 10a complémentaire de la même paire relié à l'autre extrémité du câble 12 et à l'autre extrémité du conduit 69 d'équilibrage des pressions.

La figure 3c représente le module de filtration 10a, 10b à la fin de la remontée (au voisinage de la surface du milieu marin), le piston de pressurisation 56 étant en fin de course de déplacement vers le haut et ayant repoussé le flasque supérieur 76 et donc l'équipage mobile 74 vers le haut jusqu'à ce que les clapets 71, 73 obturent les entrées 70 et, respectivement, les sorties 72 d'eau de mer. Les chambres basse pression 48 présentent leur volume maximum. La chambre haute pression 42 est remplie d'eau de mer prête à être filtrée par les membranes 43. Le module de filtration 10a, 10b est donc prêt à effectuer une nouvelle plongée.

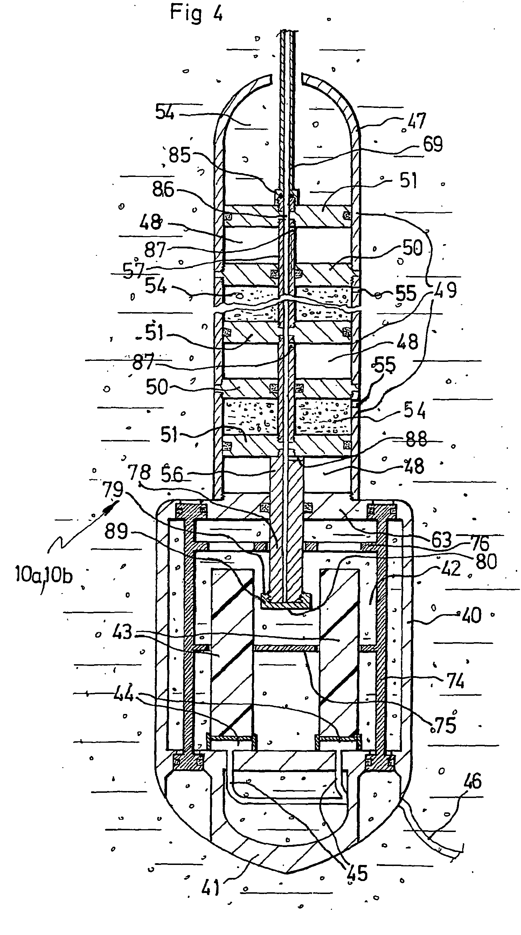

La figure 4 représente une variante de réalisation d'un module de filtration 10a, 10b dans laquelle le conduit 69 d'équilibrage des pressions fait office de câble de suspension de chaque module de filtration 10a, 10b. En outre, ce conduit 69 est directement relié au premier piston 51 par un raccord étanche 85. Chacune des tiges de liaison 57 est formée d'un tube creux, et chaque piston 51 est doté d'un passage traversant 86 central, de sorte que la pression d'air peut circuler depuis le raccord 85 à travers les différentes tiges de liaison 57 et à travers les différents pistons 51. Chaque tige de liaison 57 présente par ailleurs au moins un orifice 87 débouchant en partie supérieure de cette tige de liaison 57 dans la chambre basse pression 48. Le piston de pressurisation 56 est également creux et en communication avec les passages ménagés dans les pistons 51 et dans les tiges de liaison 57. Également, un orifice 88 débouche en partie supérieure du piston de pressurisation 56 dans la première chambre basse pression 48 disposée immédiatement au-dessus du flasque 63 et de la chambre haute pression 42. De la sorte, la communication entre les différentes chambres basses pression 48 est établie via les différents orifices 87, 88, le piston de pressurisation creux 56, les différentes tiges de liaison 57 creuses et les passages axiaux 86 des pistons 51, jusqu'au conduit 69 d'équilibrage de pression. Ce mode de réalisation est plus compact, et par ailleurs permet de minimiser les risques de fuite par les portions du conduit 69 s'étendant, dans le premier mode de réalisation décrit ci-dessus, le long et à l'extérieur du bloc cylindre 47.

Il est à noter que dans le mode de réalisation représenté figure 4, le piston de pressurisation 56 est creux sur toute sa longueur, c'est-à-dire est formé d'un tube creux, refermé à son extrémité inférieure 78 par un bouchon 89 étanche soudé formant la face 80 de pressurisation. En variante non représentée, il est possible d'utiliser un cylindre plein formant le piston de pressurisation 56, seul un passage de communication d'air en partie supérieure étant prévu pour relier le conduit d'équilibrage de pression 69 à l'intérieur de la chambre basse pression 48 via l'orifice 88 et le passage central du piston 51 auquel le piston 56 de pressurisation est relié.

Par ailleurs, cette deuxième variante de réalisation diffère de la première par le fait que la longueur du piston 56 de pressurisation est limitée à celle strictement nécessaire, correspondant à la course des pistons 51 du bloc cylindre basse pression 47. Ainsi, le collet 79 est formé à l'extrémité 78 du piston 56 par le bouchon 89.

Pour une profondeur maximum de plongée donnée, le bloc cylindre 47 basse pression comprenant une pluralité de pistons 51 et une pluralité de chambres basse pression 48 permet d'augmenter d'autant le débit d'eau filtrée produit à chaque étape de filtration (c'est-à-dire à chaque plongée) pour une course prédéterminée du piston de pressurisation 56 dans la chambre haute pression 42. En effet, l'aire utile s du piston de pressurisation 56 peut-être augmentée proportionnellement à l'augmentation de l'aire utile totale S recevant la pression hydrostatique ainsi obtenue tout en conservant le même rapport d'amplification de pression. Ainsi, dans un dispositif selon l'invention, la quantité d'eau filtrée fournie à chaque plongée est optimisée.

Ou bien, pour une aire utile s et une course en translation données du piston de pressurisation 56, la multiplication des pistons 51 et des chambres basse pression 48 permet de diminuer d'autant la profondeur maximum de plongée à laquelle les modules de filtration 10a, 10b doivent être placés pour réaliser la filtration par osmose inverse. En pratique, cette profondeur d'immersion maximale est avantageusement comprise entre 10 m et 30 m, et par exemple est de l'ordre de 20 m. Il est à noter que cette profondeur est déterminée, en fonction du rapport d'amplification de pression produit par le rapport des aires S /s, par rapport à la face réceptrice 53 médiane, ou à la zone située à mi-hauteur du bloc basse pression 47.

Par ailleurs, il est à noter que cette amélioration de la production d'eau douce est obtenue sans modification de la section hors-tout du module de filtration 10a, 10b, c'est-à-dire sans modification de ses caractéristiques hydrodynamiques. Au contraire, l'encombrement transversal hors tout du module de filtration est réduit. En particulier, il est à noter que chaque face réceptrice 53 présente un diamètre inférieur au diamètre de la chambre haute pression 42.

En pratique, en variante non représentée, l'encombrement transversal hors tout du module de filtration 10a, 10b peut être limité à celui qui est juste nécessaire pour contenir une membrane de filtration par osmose inverse 43 et les différents clapets 71, 73 et l'équipage mobile 74 de commande de ces clapets. En effet, cette membrane 43 peut être disposée à l'extrémité inférieure du corps 40, et le piston 56 peut se déplacer dans une portion d'extrémité axiale supérieur de la chambre haute pression. Les membranes 43 peuvent être alors remplacées par une seule membrane équivalente, de grand diamètre, occupant la portion d'extrémité axiale inférieure de la chambre haute pression. En outre, dans cette variante non représentée, l'aire s du piston de pressurisation 56 peut-être maximum, et occuper quasiment toute la section transversale de la chambre haute pression 42.

Le nombre des faces réceptrices 53, des chambres basses pression 48 et des tronçons de cylindres 49 empilés les uns sur les autres, est déterminé en fonction de la valeur de l'aire S que l'on souhaite obtenir. Ce nombre peut être compris entre 2 et 60, typiquement entre 3 et 30. Par exemple, si on choisit de réaliser le module de filtration 10a, 10b sensiblement sous forme d'un tube de section droite transversale minimum pour contenir une membrane de filtration 43 avec un piston 56 de diamètre maximum et des faces réceptrices 53 dont le diamètre correspond également sensiblement à celui du piston 56, Si/s = 1, et pour obtenir un rapport S /s de l'ordre de Si/s = 1, il faut empiler trente faces réceptrices 53 (pour une profondeur de 20m).

Le module de filtration 10a, 10b peut être intégré dans un carter en forme générale oblongue hydrodynamique. Par exemple, en variante non représentée, un filtre peut être prévu autour du bloc cylindre basse pression, dans le prolongement du carter délimitant la chambre haute pression. En outre, chaque module de filtration peut être également guidé dans ses déplacements de plongée et de remontée, par un ou plusieurs rails verticaux s'étendant dans le milieu marin. A l'intérieur de ces rails peuvent être disposées des couronnes de peignes-brosses empilées à une certaine distance entre elles, et destinées à débarrasser le filtre des éléments (pouvant devenir colmatants par accumulation) tout au long des plongées et des remontées de façon à former un système autonettoyant. Rien n'empêche de prévoir par ailleurs un mécanisme (non représenté) permettant de verrouiller le déplacement de chaque piston de pressurisation 56 tant qu'une pression hydrostatique minimum n'est pas atteinte. Ce mécanisme peut être du type à commande hydrostatique. En variante, il peut être commandé par l'automate 35 contrôlant le fonctionnement du dispositif. Néanmoins, l'invention permet précisément de s'affranchir d'un tel mécanisme compte tenu du fait que les modules de filtration 10a, 10b présentent des formes hydrodynamiques particulièrement efficaces, augmentant leur vitesse de déplacement dans le milieu marin, et donc diminuant d'autant la durée des phases de plongée et de remontée.

En variante également non représentée, un dispositif de contrôle de la pression régnant dans les chambres basse pression 48 peut être prévu, avec éventuellement des moyens permettant la réintroduction de gaz dans les chambres basse pression 48 depuis la surface. Par exemple le conduit 69 d'équilibrage des pressions peut être relié à un conduit débouchant en surface doté d'une vanne pouvant être ouverte pour injecter de l'air sous pression dans ce conduit 69, au moins une chambre basse pression 48, et de préférence chacune de ces chambres basse pression 48, étant dotée d'une soupape tarée permettant, lors de l'injection d'air sous pression dans cette chambre basse pression 48, la vidange de l'eau éventuellement infiltrée dans la chambre basse pression 48.

Le dispositif selon l'invention peut faire l'objet de nombreuses autres variantes de réalisation par rapport aux modes de réalisation représentés sur les figures et décrits ci-dessus.

En particulier, le dispositif selon l'invention peut comprendre plusieurs paires de modules de filtration 10a, 10b, reliées ensemble ou indépendamment les uns des autres. Également, l'invention s'applique à tous les modes de réalisation prévus dans FR 2503129. Chaque module de filtration 10a, 10b peut comprendre plusieurs chambres haute pression, et plusieurs pistons de pressurisation peuvent être prévus pour chaque chambre haute pression. Une même chambre basse pression peut recevoir plusieurs pistons basse pression, c'est-à-dire être associée à plusieurs faces réceptrices, dès lors que ces dernières se déplacent dans le même sens de variation du volume de ladite chambre basse pression. À l'inverse, au moins une face réceptrice peut être associée à plusieurs chambres basse pression. En outre, chaque chambre haute pression peut être associée à plusieurs blocs cylindre basse pression 47.

De même, l'orientation des différents pistons 51, 56 peut-être différente. Par exemple les différents pistons basse pression ne sont pas nécessairement parallèles à l'axe longitudinal de la face de pressurisation. Rien n'empêche par exemple de prévoir des pistons basse pression mobiles radialement. Mais, dans ce dernier cas, il convient de prévoir une transmission mécanique à renvoi d'angle pour entraîner la face de pressurisation à partir du déplacement de chaque piston. Le nombre de faces réceptrices, le nombre de chambres basse pression, le nombre de bloc(s) cylindre(s) basse pression, le nombre de faces de pressurisation et le nombre de chambre(s) haute pression de chaque module de filtration peuvent varier.

La transmission motorisée formée par le câble 12 de suspension, la poulie 13 et le moteur 19 peut être remplacée par toute autre forme de transmission motorisée permettant d'entraîner les modules de filtration 10a, 10b par paire en opposition de phase.

En particulier, dans une variante avantageuse, la motorisation n'est formée que d'une éolienne faisant office de moteur à source d'énergie renouvelable. Le dispositif est alors un dispositif de désalinisation totalement autonome dans son fonctionnement, exempt de moyens risquant de limiter sa durée de vie (moteur électrique, pompe, électrovanne, électronique...) et présentant donc une fiabilité et une durée de vie importante.

Rien n'empêche par ailleurs de disposer une chambre haute pression au-dessus d'un bloc cylindre basse pression, ou même interposée entre deux blocs cylindres basse pression. Le câble 12 de suspension peut être fixé non pas à l'un des pistons 51, mais directement sur le corps 40 du module de filtration 10a, 10b. Également, le conduit 69 d'équilibrage des pressions peut-être formé d'un tuyau spécifique s'étendant intégralement sous l'eau en reliant les chambres basse pression. L'automate 35 peut être remplacé par un mécanisme d'inversion automatique des mouvements, avec un dispositif mécanique de commande des phases d'arrêt des modules de filtration 10a, 10b à partir d'une transmission du déplacement des pistons et/ou des clapets au mécanisme d'inversion situé en surface.

## Revendications

1. Dispositif d'épuration d'eau de mer comprenant au moins une paire de modules de filtration (10a, 10b) d'eau de mer immergés dans le milieu marin et reliés l'un à l'autre par une transmission (12, 13, 19) motorisée adaptée pour déplacer les modules de filtration (10a, 10b) de chaque paire selon des mouvements alternatifs de plongée et de remontée dans le milieu marin en opposition de phase, chaque module de filtration (10a, 10b) comprenant :
- au moins une chambre, dite chambre haute pression(42), dotée :
- d'au moins une entrée (70) d'admission sélective en eau de mer à filtrer à l'intérieur de la chambre haute pression (42),
- d'au moins une membrane semi-perméable (43) de filtration de l'eau de mer par osmose inverse,
- d'au moins une sortie (45) de recueil de l'eau filtrée produite par chaque membrane (43) contenue dans la chambre haute pression (42),
- d'au moins une sortie (72) d'évacuation de l'eau de mer concentrée en salinité,
- d'au moins une face de piston, dite face de pressurisation (80), agencée pour présenter une aire utile s, et pouvant se déplacer dans la chambre haute pression (41) en translation selon un axe, dit axe longitudinal, de façon à déterminer la pression de l'eau de mer à l'entrée de chaque membrane (43),
**caractérisé en ce qu'**il comprend au moins un bloc cylindre (47) basse pression comportant une pluralité de faces de piston, dites faces réceptrices (53), reliées à au moins une face de pressurisation (80) de façon à pouvoir l'entraîner en translation longitudinale, ces différentes faces réceptrices (53) étant agencées pour être toutes soumises à la pression hydrostatique du milieu marin, l'aire utile S totale cumulée des différentes faces réceptrices (53) ayant une valeur supérieure à l'aire utile s de ladite face de pressurisation (80) à laquelle elles sont reliées, chaque face réceptrice (53) étant associée à au moins une chambre étanche sous atmosphère gazeuse, dite chambre basse pression (48), du bloc cylindre (47) basse pression de telle sorte que le volume de chaque chambre basse pression (48) varie dans le même sens que celui de la chambre haute pression (42) sous l'effet des déplacements simultanés en translation des faces réceptrices (53) et de ladite face de pressurisation (80).

2. Dispositif selon la revendication 1, **caractérisé en ce que** les différentes faces réceptrices (53) reliées à une même face de pressurisation (80) sont agencées les unes par rapport aux autres de telle sorte que le bloc cylindre basse pression (47) présente, par rapport à l'axe longitudinal, un encombrement transversal hors tout total inférieur ou égal à l'encombrement transversal hors tout de la portion du module de filtration (10a, 10b) délimitant la chambre haute pression (42) comprenant ladite face de pressurisation (80).

3. Dispositif selon l'une des revendications 1 ou 2, **caractérisé en ce que** les différentes faces réceptrices (53) reliées à une même face de pressurisation (80) sont guidées en translation parallèlement à l'axe longitudinal.

4. Dispositif selon l'une des revendications 1 à 3, **caractérisé en ce que** les différentes faces réceptrices (53) reliées à une même face de pressurisation (80) sont parallèles les unes les autres et à la face de pressurisation (80), et orthogonales à l'axe longitudinal, et **en ce que** ces différentes faces réceptrices (53) sont agencées les unes par rapport aux autres de façon à présenter, par rapport à l'axe longitudinal, un encombrement transversal total inférieur à la somme des encombrements transversaux de chacune des faces réceptrices (53).

5. Dispositif selon la revendication 4, **caractérisé en ce que** les différentes faces réceptrices (53) reliées à une même face de pressurisation (80) sont superposées les unes les autres dans la direction longitudinale de l'axe longitudinal de telle sorte que l'encombrement transversal de l'ensemble des dites faces réceptrices (53) est équivalent à celui d'une seule de ces faces réceptrices (53).

6. Dispositif selon l'une des revendications 1 à 5, **caractérisé en ce que** chaque face réceptrice (53) est solidaire en translation d'une face de piston, dite face basse pression (52), s'étendant dans la chambre basse pression (48).

7. Dispositif selon la revendication 6, **caractérisé en ce que** la face réceptrice (53) et la face basse pression (52) sont deux faces opposées parallèles d'un même piston (51) guidé en translation de façon étanche dans un cylindre (49) de façon à délimiter, avec ce dernier, ladite chambre basse pression (48).

8. Dispositif selon la revendication 7, **caractérisé en ce que** la face de pressurisation (80) présente au moins sensiblement la même orientation que chaque face basse pression (52) par rapport au piston (51) correspondant.

9. Dispositif selon l'une des revendications 1 à 8, **caractérisé en ce que** chaque face réceptrice (53) est une face d'un piston (51) délimitant la chambre basse pression (48), **en ce qu'**il comprend un piston (51) et une chambre basse pression (48) pour chaque face réceptrice (53), et **en ce que** les différents pistons (51) présentant les différentes faces réceptrices (53) sont reliés en translation les uns aux autres et à ladite face de pressurisation (80).

10. Dispositif selon l'une des revendications 1 à 9, **caractérisé en ce que** les chambres basse pression (48) des deux modules de filtration (10a, 10b) sont reliées les unes aux autres par au moins un conduit (69) d'équilibrage des pressions, chaque conduit (69) d'équilibrage des pressions étant adapté pour permettre l'équilibrage des pressions (48) entre les chambres basse pression sensiblement sans perte de charge.

11. Dispositif selon l'une des revendications 1 à 10, **caractérisé en ce que** chaque module de filtration (10a, 10b) est suspendu dans le milieu marin par au moins un câble (12) de suspension de la transmission motorisée, l'axe longitudinal de chaque face de pressurisation (80) et des faces réceptrices (53) correspondantes étant vertical.

12. Dispositif selon la revendication 11, **caractérisé en ce que** le câble (12) de suspension est accouplé à un piston (51) délimitant une chambre basse pression.

13. Dispositif selon l'une des revendications 1 à 12, **caractérisé en ce que** chaque chambre basse pression (48) s'étend au-dessus de la chambre haute pression (42).

14. Dispositif selon l'une des revendications 1 à 13, **caractérisé en ce que** chaque module de filtration (10a, 10b) comprend un bloc cylindre (47) basse pression unique surmontant une chambre haute pression (42) unique incorporant une face de pressurisation (80) unique d'axe longitudinal vertical.

15. Dispositif selon l'une des revendications 1 à 14, **caractérisé en ce que** l'aire utile S totale cumulée des différentes faces réceptrices (53) est supérieure à l'encombrement horizontal hors tout du module de filtration (10a, 10b).

## Claims

1. A sea-water purification device comprising at least one pair of sea-water filtration modules (10a, 10b) which are immersed in the marine environment and are connected to one another by a motorized transmission (12, 13, 19) suitable for moving the filtration modules (10a, 10b) of each pair in alternating submerging and raising movements in the marine environment in phase opposition, each filtration module (10a, 10b) comprising:
- at least one chamber, called the high-pressure chamber (42), equipped with:
- at least one inlet (70) for selectively admitting sea-water for filtration into the high-pressure chamber (42),
- at least one semi-permeable membrane (43) for filtering sea-water by reverse osmosis,
- at least one outlet (45) for collecting the filtered water produced by each membrane (43) contained in the high-pressure chamber (42),
- at least one outlet (72) for discharging sea-water that is concentrated in terms of salinity,
- at least one piston face, called the pressurization face (80), which is arranged to have an effective surface area s and is able to move in the high-pressure chamber (41) in translation according to an axis, called the longitudinal axis, so as to determine the pressure of the sea-water at the inlet of each membrane (43),
**characterized in that** the device comprises at least one low-pressure cylinder block (47) having a plurality of piston faces, called receiving faces (53), which are connected to at least one pressurization face (80) so as to be able to move it in longitudinal translation, said various receiving faces (53) being so arranged that they are all subjected to the hydrostatic pressure of the marine environment, the cumulative total effective surface area S of the various receiving faces (53) having a value greater than the effective surface area s of said pressurization face (80) to which they are connected, each receiving face (53) being associated with at least one tight chamber under a gaseous atmosphere, called the low-pressure chamber (48), of the low-pressure cylinder block (47) so that the volume of each low-pressure chamber (48) varies in the same direction as that of the high-pressure chamber (42) under the effect of the simultaneous translational movement of the receiving faces (53) and of said pressurization face (80).

2. The device according to claim 1, **characterized in that** the various receiving faces (53) connected to the same pressurization face (80) are so arranged relative to one another that the low-pressure cylinder block (47) has a total overall transverse space requirement, relative to the longitudinal axis, that is less than or equal to the overall transverse space requirement of the portion of the filtration module (10a, 10b) that delimits the high-pressure chamber (42) comprising said pressurization face (80).

3. The device according to either claim 1 or claim 2, **characterized in that** the various receiving faces (53) connected to the same pressurization face (80) are guided in translation parallel to the longitudinal axis.

4. The device according to any one of claims 1 to 3, **characterized in that** the various receiving faces (53) connected to the same pressurization face (80) are parallel to one another and to the pressurization face (80) and are orthogonal with respect to the longitudinal axis, and **characterized in that** the various receiving faces (53) are so arranged relative to one another that they have, relative to the longitudinal axis, a total transverse space requirement that is less than the sum of the transverse space requirements of each of the receiving faces (53).

5. The device according to claim 4, **characterized in that** the various receiving faces (53) connected to the same pressurization face (80) are superposed on one another in the longitudinal direction of the longitudinal axis so that the transverse space requirement of the totality of said receiving faces (53) is equivalent to that of a single one of those receiving faces (53).

6. The device according to any one of claims 1 to 5, **characterized in that** each receiving face (53) is integral in translation with a piston face, called the low-pressure face (52), which extends in the low-pressure chamber (48).

7. The device according to claim 6, **characterized in that** the receiving face (53) and the low-pressure face (52) are two opposing parallel faces of the same piston (51) which is guided tightly in translation in a cylinder (49) so as to delimit therewith said low-pressure chamber (48).

8. The device according to claim 7, **characterized in that** the pressurization face (80) has at least substantially the same orientation as each low-pressure face (52) relative to the corresponding piston (51).

9. The device according to any one of claims 1 to 8, **characterized in that** each receiving face (53) is a face of a piston (51) delimiting the low-pressure chamber (48), **characterized in that** the device comprises a piston (51) and a low-pressure chamber (48) for each receiving face (53), and **in that** the various pistons (51) having the various receiving faces (53) are connected in translation to one another and to said pressurization face (80).

10. The device according to any one of claims 1 to 9, **characterized in that** the low-pressure chambers (48) of the two filtration modules (10a, 10b) are connected to one another by at least one pressure equalizing pipe (69), each pressure equalizing pipe (69) being suitable for allowing the pressure equalization (48) between the low-pressure chambers to be equalized substantially without energy loss.

11. The device according to any one of claims 1 to 10, **characterized in that** each filtration module (10a, 10b) is suspended in the marine environment by at least one suspension cable (12) of the motorized transmission, the longitudinal axis of each pressurization face (80) and of the corresponding receiving faces (53) being vertical.

12. The device according to claim 11, **characterized in that** the suspension cable (12) is coupled to a piston (51) delimiting a low-pressure chamber.

13. The device according to any one of claims 1 to 12, **characterized in that** each low-pressure chamber (48) extends above the high-pressure chamber (42).

14. The device according to any one of claims 1 to 13, **characterized in that** each filtration module (10a, 10b) comprises a single low-pressure cylinder block (47) located above a single high-pressure chamber (42) which includes a single pressurization face (80) having a vertical longitudinal axis.

15. The device according to any one of claims 1 to 14, **characterized in that** the cumulative total effective surface area S of the various receiving faces (53) is greater than the overall horizontal space requirement of the filtration module (10a, 10b).

## Patentansprüche

1. Vorrichtung für die Reinigung von Meerwasser, die zumindest ein Paar Filtermodule (10a, 10b) für Meerwasser umfasst, die in das Meeresmilieu eingetaucht und über eine Kraftübertragung (12, 13, 19) mit Motorantrieb miteinander verbunden sind, die geeignet ist, die Filtermodule (10a, 10b) jedes Paars in abwechselnden Tauch- und Anstiegbewegungen im Meeresmilieu in entgegengesetzter Phase zu bewegen, wobei jedes Filtermodul (10a, 10b) folgende Teile umfasst:
- zumindest eine Kammer, die sogenannte Hochdruckkammer (42), versehen mit:
- zumindest einem selektiven Einlass für die Zulassung von Meerwasser, das im Innern der Hochdruckkammer (42) gefiltert werden soll,
- zumindest einer halbdurchlässigen Membran (43) für die Filterung des Meerwassers durch umgekehrte Osmose,
- zumindest einem Auslass (45) zum Auffangen des gefilterten Wassers, das von jeder in der Hochdruckkammer (42) vorhandenen Membran (43) erzeugt wird,
- zumindest einem Auslass (72) für den Ablauf des konzentriert salzhaltigen Meerwassers,
- zumindest einer Kolbenseite, der sogenannten Druckseite (80), die so gestaltet ist, dass sie einen Nutzbereich s aufweist, und die sich in der Hochdruckkammer (41) in Translation nach einer Achse, der sogenannten Längsachse, bewegen kann, so dass der Druck des Meerwassers am Einlass jeder Membran (43) bestimmt wird,
**dadurch gekennzeichnet, dass** sie zumindest einen Niederdruck-Zylinderblock (47) umfasst, der eine Mehrzahl von Kolbenseiten, die sogenannten Aufnahmeseiten (53), umfasst, die mit zumindest eine Druckseite (80) verbunden sind, sodass sie in Längstranslation geführt werden kann, wobei diese verschiedenen Aufnahmeseiten (53) so gestaltet sind, dass sie alle dem Wasserdruck des Meeresmilieus ausgesetzt werden können, wobei der gesamte kumulierte Nutzbereich S der einzelnen Aufnahmeseiten (53) einen Wert über demjenigen des Nutzbereichs s der besagten Druckseite (80) hat, mit der sie verbunden sind, wobei jede Aufnahmeseite (53) zumindest einer dichten Kammer unter Gasatmosphäre zugeordnet ist, der sogenannten Niederdruckkammer (48), des Niederdruck-Zylinderblocks (47), sodass das Volumen jeder Niederdruckkammer (48) in der gleichen Richtung variiert wie dasjenige der Hochdruckkammer (42), und dies unter der Wirkung der gleichzeitigen Translationsverschiebungen der Aufnahmeseiten (53) und der besagten Druckseite (80).

2. Vorrichtung nach Anspruch 1, **dadurch gekennzeichnet, dass** die einzelnen Aufnahmeseiten (53), die mit einer gleichen Druckseite (80) verbunden sind, untereinander so gestaltet sind, dass der Niederdruck-Zylinderblock (47) im Verhältnis zur Längsachse transversale Gesamtabmessungen unter oder gleich den transversalen Gesamtabmessungen des Abschnitts des Filtermoduls (10a, 10b) aufweist, das die Hochdruckkammer (42) abgrenzt, die die besagte Druckseite (80) umfasst.

3. Vorrichtung nach einem beliebigen der vorstehenden Ansprüche 1 oder 2, **dadurch gekennzeichnet, dass** die einzelnen Aufnahmeseiten (53), die mit einer gleichen Druckseite (80) verbunden sind, in Translation parallel zur Längsachse geführt werden.

4. Vorrichtung nach einem beliebigen der vorstehenden Ansprüche 1 bis 3, **dadurch gekennzeichnet, dass** die einzelnen Aufnahmeseiten (53), die mit einer gleichen Druckseite (80) verbunden sind, parallel zueinander und zur Druckseite (80) und orthogonal zur Längsachse sind, und **dadurch**, dass diese einzelnen Aufnahmeseiten (53) zueinander so gestaltet sind, dass sie im Verhältnis zur Längsachse transversale Gesamtabmessungen geringer als die Summe der transversalen Abmessungen jeder der Aufnahmeseiten (53) aufweisen .

5. Vorrichtung nach Anspruch 4, **dadurch gekennzeichnet, dass** die einzelnen Aufnahmeseiten (53), die mit einer gleichen Druckseite (80) verbunden sind, in der Längsrichtung der Längsachse jeweils übereinander liegen, sodass die transversalen Abmessungen aller besagten Aufnahmeseiten (53) gleich denjenigen einer einzigen dieser Aufnahmeseiten (53) ist.

6. Vorrichtung nach einem beliebigen der vorstehenden Ansprüche 1 bis 5, **dadurch gekennzeichnet, dass** jede Aufnahmeseite (53) in Translation fest mit einer Kolbenseite, der sogenannten Niederdruckseite (52) verbunden ist, die sich in der Niederdruckkammer (48) erstreckt.

7. Vorrichtung nach Anspruch 6, **dadurch gekennzeichnet, dass** die Aufnahmeseite (53) und die Niederdruckseite (52) zwei entgegengesetzte und parallel zu einem gleichen Kolben (51) stehende Seiten sind, der dicht in Translation in einem Zylinder (49) geführt wird, sodass mit diesem Letzteren die besagte Niederdruckkammer (48) abgegrenzt wird.

8. Vorrichtung nach Anspruch 7, **dadurch gekennzeichnet, dass** die Druckseite (80) zumindest deutlich die gleiche Ausrichtung wie jede Niederdruckseite (52) im Verhältnis zum entsprechenden Kolben (51) aufweist.

9. Vorrichtung nach einem beliebigen der vorstehenden Ansprüche 1 bis 8, **dadurch gekennzeichnet, dass** jede Aufnahmeseite (53) eine Seite eines Kolbens (51) ist, der die Niederdruckkammer (48) abgrenzt, **dadurch**, dass sie einen Kolben (51) und eine Niederdruckkammer (48) für jede Aufnahmeseite (53) umfasst, und **dadurch**, dass die einzelnen Kolben (51), die die einzelnen Aufnahmeseiten (53) aufweisen, in Translation miteinander und mit der besagten Druckseite (80) verbunden sind.

10. Vorrichtung nach einem beliebigen der vorstehenden Ansprüche 1 bis 9, **dadurch gekennzeichnet, dass** die Niederdruckkammern (48) der beiden Filtermodule (10a, 10b) über zumindest eine Druckausgleichleitung (69) miteinander verbunden sind, wobei jede Druckausgleichleitung (69) so angepasst ist, dass sie den Druckausgleich (48) zwischen den Niederdruckkammern deutlich ohne Druckverlust ermöglicht.

11. Vorrichtung nach einem beliebigen der vorstehenden Ansprüche 1 bis 10, **dadurch gekennzeichnet, dass** jedes Filtermodul (10a, 10b) im Meeresmilieu an mindestens einem Aufhängekabel (12) der Kraftübertragung mit Motorantrieb hängt, wobei die Längsachse jeder Druckseite (80) und der entsprechenden Aufnahmeseiten (53) vertikal ist.

12. Vorrichtung nach Anspruch 11, **dadurch gekennzeichnet, dass** das Aufhängekabel (12) an einen Kolben (51) gekoppelt ist, der eine Niederdruckkammer abgrenzt.

13. Vorrichtung nach einem beliebigen der vorstehenden Ansprüche 1 bis 12, **dadurch gekennzeichnet, dass** sich jede Niederdruckkammer (48) über der Hochdruckkammer (42) erstreckt.

14. Vorrichtung nach einem beliebigen der vorstehenden Ansprüche 1 bis 13, **dadurch gekennzeichnet, dass** jedes Filtermodul (10a, 10b) einen einzigen Niederdruck-Zylinderblock (47) umfasst, der sich über einer einzigen Hochdruckkammer (42) befindet, die eine einzige Druckseite (80) in vertikaler Längsachse hat.

15. Vorrichtung nach einem beliebigen der vorstehenden Ansprüche 1 bis 14, **dadurch gekennzeichnet, dass** der gesamte kumulierte Nutzbereich S der einzelnen Aufnahmeseiten (53) über den horizontalen Gesamtabmessungen des Filtermoduls (10a, 10b) beträgt.
